# EUROPÄISCHE PATENTSCHRIFT

(11) **EP 0 764 497 B1**
(45) Veröffentlichungstag und Bekanntmachung des Hinweises auf die Patenterteilung: **12.01.2000**
(21) Anmeldenummer: 95114993.9
(22) Anmeldetag: 23.09.1995
(51) Int. Cl.: B23K 26/00

(54) **Vorrichtung zum Herstellen von Blechverbindungen durch Nahtschweissen mittels Laserstrahl**
Device for producing metal sheet connections by seam welding with a laser beam
Dispositif pour réaliser la liaison de tôles par cordon de soudure au moyen d'un faisceau laser

(43) Veröffentlichungstag der Anmeldung: 26.03.1997
(73) Patentinhaber: AUDI AG, 85045 Ingolstadt (DE)
(72) Erfinder: Hofstetter, Josef, D-85088 Vohburg (DE)
(74) Vertreter: Geissler, Manfred

(56) Entgegenhaltungen:
- DE-A- 3 407 770
- DE-A- 3 733 568
- DE-A- 4 207 016
- DE-A- 4 403 999
- DE-A- 4 415 035
- DE-U- 8 900 556
- FR-A- 2 636 554
- US-A- 4 127 761
- PATENT ABSTRACTS OF JAPAN vol. 17 no. 395 (M-1451) ,23.Juli 1993 & JP-A-05 077071 (NIPPONDENSO CO LTD) 30.März 1993,

## Beschreibung

Die Erfindung betrifft eine Vorrichtung zum Herstellen von Blechverbindungen durch Nahtschweißen mittels Laserstrahl, wobei angrenzend an die unmittelbare Schweißstelle dem Laserstrahl ein auf eines der Bleche einwirkendes Andrückelement zugeordnet ist, gemäß der Druckschrift FR-A-2 636 554.

Das Laserstrahlschweißen unter Verwendung von Festkörper- oder Gaslaser gewinnt, insbesondere auch in der Automobiltechnik, immer größere Bedeutung. Dies liegt im wesentlichen in den mit diesem Schweißverfahren einhergehenden Vorteilen begründet, wie sie im einzelnen beispielsweise in dem deutschen Gebrauchsmuster DE-U-89 00 556.2 in einer dort vorgenommenen Gegenüberstellung zu anderen gebräuchlichen Schweißverfahren hervorgehoben worden sind.

Um allerdings die Vorteile dieses Schweißverfahrens optimal nutzen zu können und ein entsprechendes Arbeitsergebnis zu erhalten, ist es gerade beim Laserstrahlschweißen erforderlich, daß z. B. der Spalt zwischen zwei im Überlappstoß miteinander zu verbindenden Blechen nur ein Bruchteil (bis ca. 0,25) der Blechdicke beträgt. Diese geringen Fertigungstoleranzen lassen sich jedoch in der Regel beim Herstellungsprozeß (z.B. Tiefziehen) der Blechteile nicht erreichen, so daß die Ungleichmäßigkeiten und Ungenauigkeiten in der Blechkontur die geforderten Toleranzen überschreiten.

Auch das oben bezeichnete Gebrauchsmuster sowie die FR-A-2 636 554 befassen sich mit dieser Problematik und schlagen zur Lösung vor, daß die Bleche so dicht wie möglich neben der Laser-Fokussiereinheit durch mindestens eine Rolle gegeneinander pressbar sind und daß die Rolle und die Laser-Fokussiereinheit gemeinsam beweglich miteinander verbunden sind. In weiterer Ausgestaltung dieses Vorschlages sind die Bleche in dem Gebrauchsmuster zangenartig durch zwei Rollen (Unterrolle und Oberrolle) und gegebenenfalls unter Zuhilfenahme weiterer Stützrollen mittels einer zugeordneten Kolben-Zylindereinheit gegeneinander pressbar.

Der konstruktive Aufwand für die Lösung des zugrundeliegenden Problems ist als relativ hoch anzusehen. Da Oberrolle und Fokussiereinheit mit Laserstrahlfokussierung konstruktionsbedingt in Richtung des Schweißnahtverlaufes nebeneinanderliegen, ist eine gewisse Mindestbreite der Bleche erforderlich. Darüberhinaus sind gerade im Fahrzeug-Karosseriebau häufig Schweißnähte an ausgesprochen unzugänglichen Stellen herzustellen, wofür die Vorrichtung gemäß Gebrauchsmuster nicht geeignet ist.

Die gleichen Nachteile ergeben sich bei Verwendung einer in der deutschen Patentschrift DE 34 07 770 C2 gezeigten Vorrichtung zum Verschweißen von Blechen, insbesondere von Halbschalen eines Kraftstoffbehälters für Kraftfahrzeuge, mittels Laserstrahl, bei der anstatt Rollen ein zur horizontalen Ausrichtung der Bleche dienender gesenkartiger Halter als Auflager für das untere Blech und ein zur Aufbringung der Preßkraft auf das obere Blech dienender Niederhalter verwendet werden.

Davon ausgehend liegt der Erfindung die Aufgabe zugrunde, die Schweißvorrichtung gemäß Oberbegriff des Patentanspruches 1 in der Weise weiterzubilden, daß zum einen mit konstruktiv einfachen Mitteln der gewünschte geringe Spalt zwischen den Blechen stets eingehalten werden kann und daß zum anderen auch Schweißnähte an ausgesprochen unzugänglichen, geringen Freiraum bietenden Stellen herstellbar sind.

Dies gelingt erfindungsgemäß mit einer Vorrichtung gemäß Patentanspruch 1.

Es hat sich in praktischen Versuchen gezeigt, daß der für die Einhaltung des geringen Spaltes erforderliche Anpreßdruck relativ klein sein kann (ca. 150 N - 400 N) und dabei ohne weiteres durch das erfindungsgemäß vorgeschlagene Andruckpin aufgebracht werden kann. Die Notwendigkeit eines nur relativ geringen Anpreßdruckes wurde in der vorbeschriebenen Patentschrift DE 34 07 770 C2 an sich erkannt (vgl. Spalte 5, Zeilen 14-17); die sich daraus ergebenden vorteilhaften Konsequenzen bezüglich des konstruktiven Aufbaues der Schweißvorrichtung wurden jedoch nicht gezogen.

Die über das gegenüberliegende Blech aufzubringende Auflagekraft kann ohne weiteres durch das betreffende Blechteil selbst aufgebracht werden, wenn es beispielsweise Bestandteil einer einigermaßen steifen Struktur (z. B. bereits geschweißter Rahmen oder zusammengesetztes Profilteil) ist. Ansonsten genügt ein entsprechend dimensionierter Auflagerahmen im Bereich dieses gegenüberliegenden Bleches.

Weitere Vorteile der Erfindung gehen aus den Unteransprüchen hervor, die besonders vorteilhafte Weiterbildungen beschreiben. So ist es bei der Verwendung des erfindungsgemäßen Andruckpins möglich, dieses in Richtung des Schweißnahtverlaufes der Laser-Fokussiereinheit bzw. der Laserstrahlfokussierung vorzulagern oder ggf. auch nachzulagern, so daß die erfindungsgemäße Vorrichtung z. B. auch bei besonders schmalen Blechen eingesetzt werden kann. Dadurch besteht im unmittelbaren Bereich der Schweißstelle genug Freiraum für das Austreten von Prozeßgasen (z.B. Zinkgas bei Verschweißen verzinkter Bleche) durch die Blechspalten.

Erfindungsgemäß dient das Andruckpin auch als Zufürleitung für ein zum Schweißen ggf. erforderliches Schutzgas (z. B. Argon, Helium oder ein Gemisch aus beiden).

Zur näheren Erläuterung der Erfindung dienen Ausführungsbeispiele, welche in der Zeichnung dargestellt und nachstehend beschrieben sind. Es zeigt
- Fig. 1: eine Seitenansicht der erfindungsgemäßen Schweißvorrichtung mit Laser-Fokussiereinheit und Andruckpin,
- Fig. 2: eine Schnittdarstellung gemäß Linie B/B nach Fig. 1
- Fig. 3: eine Draufsicht gemäß Pfeil A in Fig. 1 und
- Fig. 4: den vorderen Bereich der Schweißvorrichtung gemäß Fig. 1, ergänzt um Einrichtungen für die Zuführ von Zusatzdraht und zur Erkennung des vorgesehenen Schweißnahtverlaufes.

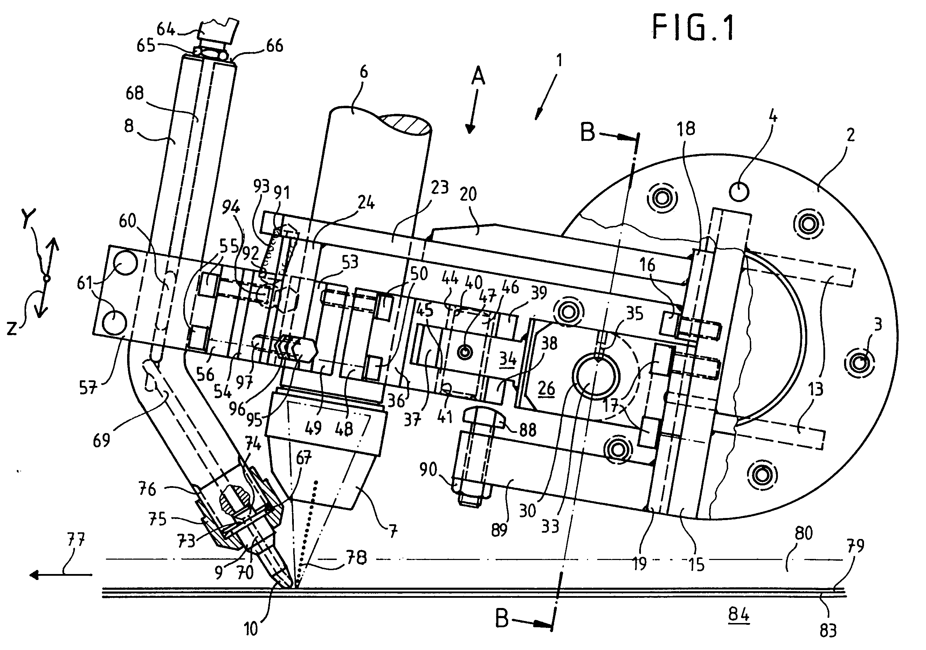

Gemäß Zusammenschau der Darstellungen nach den Figuren 1 bis 3 wird die Schweißvorrichtung 1 von einem Flansch 2 aufgenommen, der seinerseits wiederum mittels gleichmäßig über seinen Umfang verteilt angeordnete Befestigungsschrauben 3 und der Verdrehsicherung dienende Stifte 4 von einem nicht näher gezeigten Trägerelement 5, beispielsweise dem Endgelenk eines Schweißroboters, aufgenommen ist.

Die weitere Rahmenkonstruktion der Schweißvorrichtung 1 zur Aufnahme einer Laser-Fokussiereinheit 6 mit Laserstrahlfokussierung 7 und einem als abgewinkelter Stab ausgebildeten Träger 8 für ein aufgesetztes stiftförmiges Andruckpin 9 mit einem kegelig zulaufenden Ende 10 ist teilweise als Schweißkonstruktion ausgeführt. Die entsprechenden Schweißnähte, überwiegend Kehlnähte, sind, soweit dargestellt, in den Figuren nicht eigens mit Bezugszeichen versehen, sondern vielmehr als vollflächig geschwärztes Dreieck erkennbar. Das Pinende 10 kann auch ohne weiteres anders geformt, beispielsweise abgeplattet sein.

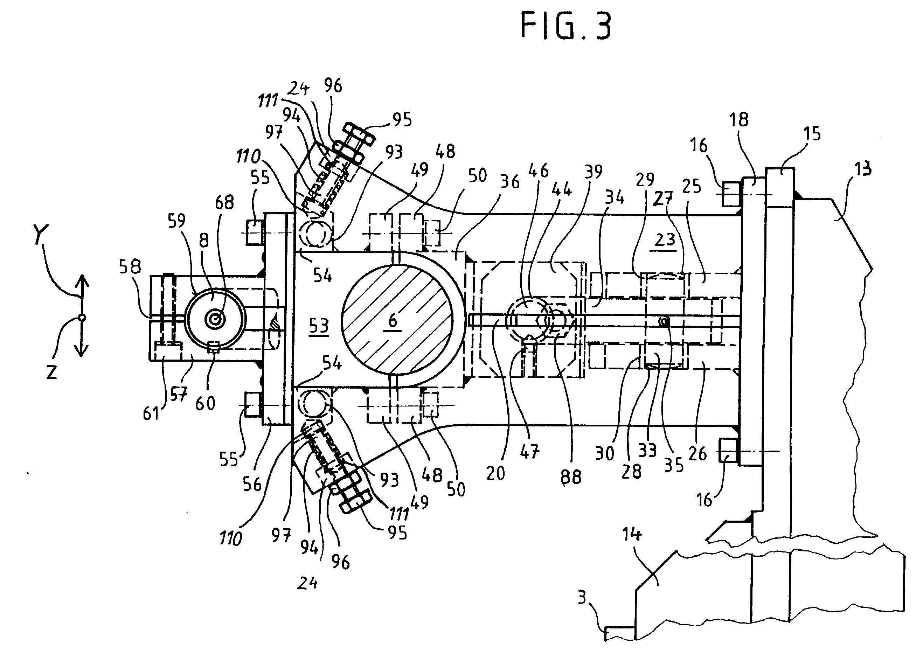

Eine bezüglich der Ebene des Flansches 2 orthogonal von diesem wegragende und beidseitig mit Stützrippen 13,14 versehene Tragplatte 15 dient der Aufnahme - jeweils mittels Befestigungsschrauben 16,17 - einer oberen sowie einer unteren Grundplatte 18,19. An die obere Grundplatte 18 ist ein langgestreckter, im vorderen Bereich sich V-förmig erweiternder (vergl. Fig. 3) und mittels Versteifungsrippe 20 stabilisierter Tragbalken 23 angesetzt (angeschweißt), wobei in besagtem vorderen V-förmig ausladenden Bereich beidseitig nach unten wegragende Stege 24 angebracht sind, deren Funktion später noch erläutert werden wird.

Von der unteren Grundplatte 19 ragen zwei nebeneinander angeordnete und einen Freiraum zwischen sich belassende Lagerstege 25,26 weg, die etwa im mittleren Bereich miteinander fluchtende Bohrungen 27,28 aufweisen, in die jeweils eine Lagerhülse 29,30 zur Aufnahme eines Lagerbolzens 33 eingesetzt ist. Der Lagerbolzen 33 wiederum steht mit einem ersten, in den zwischen den Lagerstegen 25,26 gebildeten Freiraum sich hineinerstreckenden Gelenkarm 34 in drehfester (Gewindestift 35) Mitnahmeverbindung.

Der nach vorne (in Richtung auf die Laserfokussiereinheit 6) aus den Lagerstegen 25,26 herausragende Bereich des ersten Gelenkarmes 34 ist über eine der zuvor beschriebenen Gelenkverbindung konstruktiv entsprechende Gelenkverbindung mit einem zweiten Gelenkarm 36 gekoppelt. Auch hier sind wiederum zwei eine Freisparung 37 zwischen sich belassende Lagerstege 38,39 mit miteinander fluchtenden Bohrungen 40,41 ausgestattet, in die Lagerhülsen 44,45 zur Aufnahme eines Lagerbolzens 46 eingesetzt sind. Dieser steht wiederum mittels Gewindestift 47 in entsprechender Weise mit dem ersten Gelenkarm 34 in drehfester Mitnahmeverbindung. Die Schwenkachsen beider Gelenkverbindungen stehen dabei aufeinander senkrecht.

Ein gegenüberliegendes Ende des zweiten Gelenkarmes 36 ist halbschalenförmig ausgebildet und über randseitige Flansche 48,49 mittels Befestigungsschrauben 50 mit einem in diesem Bereich ebenfalls halbschalenförmig ausgebildeten Fortsatz 53 verbunden.

Die so gebildete Lagerschale dient der Halterung der Laserfokussiereinheit 6 mit Laserfokussierung 7, wobei bezüglich deren konstruktivem und funktionellem Aufbau im einzelnen weitere Erläuterungen entbehrlich sind, weil dies im Stand der Technik hinlänglich bekannt und nicht Gegenstand der Erfindung ist.

Ein gegenüberliegendes Ende des Fortsatzes 53 weist seitliche Ausladungen 54 auf, die unter anderem der Aufnahme von Befestigungsschrauben 55 dienen, über die eine Grundplatte 56 eines Endstückes 57 der Schweißvorrichtung 1 am Fortsatz 53 befestigt ist. Ein vorderer Längsschlitz 58 des Endstückes 57 mündet in eine weitere Lagerschale 59, in die der eingangs bereits erwähnte Träger 8 mit endseitigem Andruckpin 9 einsetzbar, mittels Paßfeder 60 gegen Verdrehen gesichert und mittels Klemmschrauben 61 in seiner Position fixiert werden kann.

In vorteilhafter Weiterbildung der Erfindung dienen diese Andrückelemente gleichzeitig dem Zuführen von Schutzgas (z.B. Argon, Helium oder ein Gemisch aus beiden) für den Schweißprozeß. Zu diesem Zweck mündet eine Schlauchleitung 64 in einen Schiauchanschluß 65 an einer oberen Stirnfläche 66 des Trägers 8. Die Weiterleitung des Schutzgases geschieht über jeweils von den beiden gegenüberliegenden Stirnflächen 66,67 des Trägers 8 eingebrachte Bohrungen 68,69, die in eine weitere Bohrung 70 im Andruckpin 9 übergehen. Ein zentrischer (auf die Längsachse bezogen) Anschlußzapfen 73 ragt in eine entsprechende, ebenfalls zentrische Ausnehmung 74 im Träger 8 hinein und sorgt so für die exakte Positionierung des Andruckpins 9. Dieses ist letztlich mittels einem einen schnellen Wechsel des Andruckpins 9 ermöglichenden Befestigungsmittel, nämlich einer Überwurfmutter 75, welche in ein trägerseitiges Gewinde 76 eingreift, fest mit dem Träger 8 verbunden.

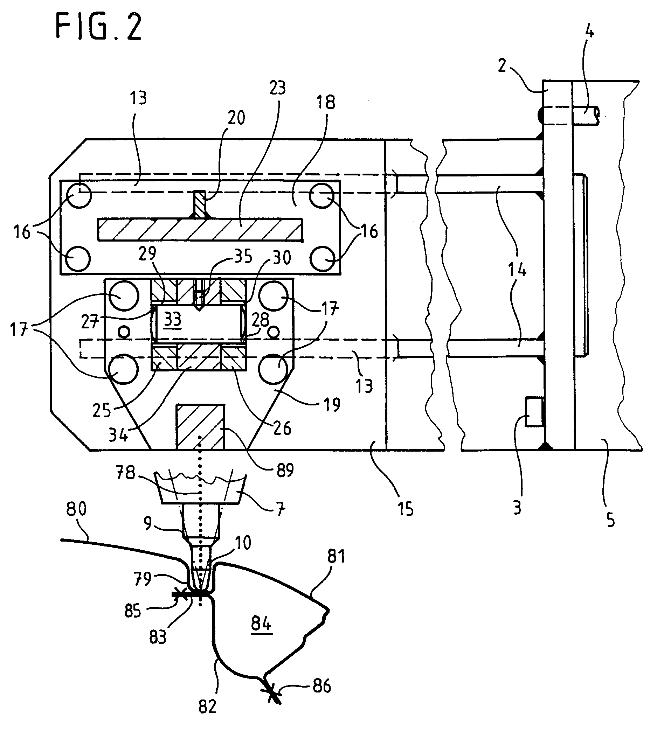

Das Andruckpin 9 ist in Richtung (Pfeil 77) der herzustellenden Schweißnaht der Laserstrahlfokussierung 7 und somit dem Laserstrahl 78 vorgelagert. Dadurch, und insbesondere auch durch das schmale Pinende 10 lassen sich selbst an unzugänglichen Stellen zuverlässig Schweißnähte herstellen, wie dies aus Fig. 2 ersichtlich wird. Dort wird ein abgewinkelter Flansch 79 eines Dachbleches 80 einer Kraftfahrzeugkarosserie mit einem zugeordneten Flansch 83 eines Dachrahmens 84 verbunden. Dem Pinende 10 ist es dabei ohne weiteres möglich, in den durch die Abwinkelungen gebildeten Spalt einzudringen und den oberen Flansch 79 mit einer vorgegebenen Andruckkraft zu kontaktieren, d.h. während des Schweißvorganges auf diesem entlangzugleiten. Da der Dachrahmen 84 als aus zwei Rahmenblechen 81,82 sich zusammensetzendes, vorgefertigtes (Schweißnähte 85,86) Profil ausgeführt und insoweit ausreichend formstabil ist, kann vom Flansch 83 die notwendige Gegenkraft aufgebracht werden. In Anwendungsfällen, wo dies nicht gegeben ist, kann beispielsweise durch ein Auflagerahmen die vom Andruckpin 9 ausgeübte Kraft zum Eliminieren eines zwischen den Flanschen 79,83 eventuell vorhandenen Spaltes aufgenommen werden.

Um eine optimale Führung von Laserfokussiereinheit 6 bzw. Laserstrahlfokussierung 7 und Träger 8 bzw. Andruckpin 9 zu erreichen, ist die sie aufnehmende Einheit der Schweißvorrichtung 1 in y- und z-Richtung federnd gelagert. Die notwendigen Bewegungs-Freitheitsgrade hierfür ergeben sich in erster Linie durch die beiden Lagerstellen (Lagerbolzen 33 und 46).

Die in z-Richtung nach unten gehende Schwenkbewegung der Schweißvorrichtung 1 wird mittels Anschlagschraube 88 begrenzt, die in einen an der unteren Grundplatte 19 angesetzten und von diesem wegragenden Arm 89 eingesetzt ist. Eine Kontermutter 90 sichert die vorgegebene Position der Anschlagschraube 88. An deren Oberseite kommt beim nach unten Schwenken der Schweißvorrichtung 1 die Unterseite des Lagersteges 38 des zweiten Gelenkarmes 36 zur Anlage.
Beim Anstellen der Schweißvorrichtung 1 bzw. des Andruckpins 9 an den abgewinkelten Flansch 79 des Dachbleches 80 wird die Andruckkraft bestimmt und begrenzt durch die Federhärte zweier Druckfedern 93, die sich beidseitig am vorderen Ende des Tragbalkens 23 und an den Oberseiten der seitlichen Ausladungen 54 in dortigen Ausnehmungen 91,92 abstützen.

Die Schwenkbeweglichkeit in y-Richtung ergibt sich aufgrund der Lagerung mittels Lagerbolzen 46. Beeinflußt wird die Schwenkbewegung wiederum durch zwei gegenüberliegend angeordnete und zum einen an den Innenseiten der Stege 24 und zum anderen an den seitlichen Ausladungen 54 in dortigen Ausnehmungen 110,111 sich abstützende Druckfedern 94. In die Stege 24 eingesetzte Schrauben 95 mit Kontermuttern 96 dienen mit ihrem jeweiligen Schraubenschaft 97 als Anschlag. Die Schwenkbeweglichkeit in y-Richtung wird nämlich durch die Einschraubtiefe der Schrauben 95 begrenzt, insofern, als das vordere Ende des jeweiligen Schraubenschaftes 97 an der seitlichen Ausladung 54 des Fortsatzes 53 zur Anlage kommt.

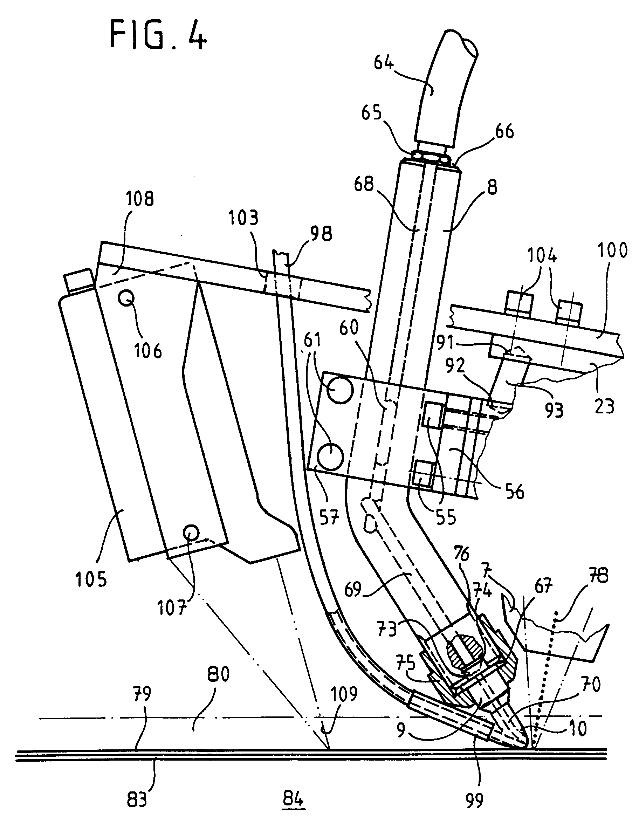

Eine Ergänzung der erfindungsgemäßen Schweißvorrichtung 1 ist abschließend in Fig. 4 gezeigt. In Abhängigkeit vom zu schweißenden Werkstoffund der Nahtform (z.B. Stoßnaht) ist es bisweilen erforderlich, der Schweißstelle Zusatzdraht zuzuführen. Dies kann mittels einer Schweißdrahtzuführung 98 (z. B. Führungsspirale) mit endseitigem Mundstück 99 erfolgen, welches einen an sich bekannten konstruktiven Aufbau besitzt und von einem Stützbalken 100 an einer Anschlußstelle 103 gehalten bzw. geführt ist, wobei der Stützbalken 100 mittels Befestigungsschrauben 104 am vorderen Ende des Tragbalkens 23 befestigt ist.

Auch eine an sich bekannte Sensoreinheit 105 (z.B. Kamera) zur Nahterkennung kann der Schweißvorrichtung 1 zugeordnet sein, so daß mit Hilfe eines Regelkreises die Bewegung der Schweißvorrichtung 1 mit dem gewünschten Schweißnahtverlauf in Einklang gebracht werden kann. Zu diesem Zweck ist die Sensoreinheit 105 an oberen und unteren Anschlußstellen 106,107 von einem etwa vertikal gerichteten Halterahmen 108 des Stützbalkens 100 aufgenommen, in der Weise, daß ein Sensorstrahl 109 der Laserfokussierung 7 und damit dem Laserstrahl 78 vorauseilend den Schweißnahtverlauf 79 abtastet.

Die gesamte Schweißvorrichtung 1 ist vorzugsweise im wesentlichen aus einem Aluminiumwerkstoff gefertigt. Träger 8, Andruckpin 9 und Überwurfmutter 75 sind aus Stahl, das Mundstück 99 der Scheißdrahtzuführung 98 aus Kupfer.

## Patentansprüche

1. Vorrichtung zum Herstellen von Blechverbindungen durch Nahtschweißen mittels Laserstrahl, wobei angrenzend an die unmittelbare Schweißstelle dem Laserstrahl ein auf eines der Bleche einwirkendes Andrückelement zugeordnet ist, **dadurch gekennzeichnet**, daß das Andrückelement als ein stiftförmiges Andruckpin (9) ausgebildet ist, der in Richtung der herzustellenden Schweißnaht dem Laserstrahl (78) vor- oder nachgelagert ist und daß das Andruckpin (9) eine Einrichtung zur Zufuhr von Schutzgas für den Schweißprozeß zur Schweißstelle aufweist.

2. Vorrichtung nach Anspruch 1, **dadurch gekennzeichnet**, daß das Andruckpin (9) über Befestigungsmittel (75) an ein unteres Ende eines als abgewinkelter Stab ausgebildeten Trägers (8) angesetzt ist, der von einem vorderen Endstück (57) der Schweißvorrichtung (1) gehalten wird.

3. Vorrichtung nach Anspruch 1, **dadurch gekennzeichnet**, daß die Schutzgaszufuhr des weiteren über den Träger (8) des Andruckpin (9) erfolgt.

4. Vorrichtung nach Anspruch 3, **dadurch gekennzeichnet**, daß eine Schlauchleitung (64) in einen Schlauchanschluß (65) an einer oberen Stirnfläche (66) des Trägers (8) einmündet, welches über Bohrungen (68,69) im Träger (8) und eine weitere Bohrung (70) im Andruckpin (9) an das Andruckpinende (10) gelangt.

5. Vorrichtung nach Anspruch 1, **dadurch gekennzeichnet**, daß das Andruckpin (9) und eine den Laserstrahl (78) erzeugende Laserfokussiereinheit (6) über die Schweißvorrichtung (1) starr miteinander gekoppelt und bezüglich des Schweißnahtverlaufes von der Schweißvorrichtung (1) in y- und z-Richtung federnd gelagert aufgenommen sind.

6. Vorrichtung nach Anspruch 5, **dadurch gekennzeichnet**, daß die Schweißvorrichtung (1) zwischen einem sie aufnehmenden Trägerelement (5) und den Anschlußstellungen von Laserfokussiereinheit (6) und Andruckpin-Träger (8) zwei rechtwinklig aufeinander stehende, eine Schwenkbewegung der jeweils nachgeschalteten Einheit zulassende Lagerstellen (33,46) aufweist.

7. Vorrichtung nach Anspruch 6, **dadurch gekennzeichnet**, daß sie im wesentlichen folgendermaßen aufgebaut ist:
• ein an eine obere Grundplatte (18) angesetzter, langgestreckter und im vorderen Bereich sich v-förmig erweiternder und mittels Versteifungsrippe (20) stabilisierter Tragbalken (23) mit im v-förmigen Bereich nach unten wegragenden Stegen (24),
• an eine untere Grundplatte (19) angesetzte Lagerstege (25,26) zur Aufnahme des Lagerbolzens (33), der mit einem sich daran anschließenden Gelenkarm (34) in drehfester Mitnahmeverbindung steht,
• einen nach vorne in Richtung auf die Laserfokussiereinheit (6) an den Gelenkarm (34) über den zweiten Lagerbolzen (46) mittels Lagerstegen (38,39) angeschlossenen zweiten Gelenkarm (36),
• einen sich an den zweiten Gelenkarm (36) anschließenden und mit diesem verbundenen Fortsatz (53), wobei an der Verbindungsstelle eine Lagerschale zur Halterung der Laserfokussiereinheit (6) gebildet ist,
• ein an den Fortsatz (53) sich anschließendes und mit diesem verbundenes Endstück (57), welches eine weitere Lagerschale (59) zur Aufnahme und Halterung des Trägers (8) für das Andruckpin (9) aufweist.

8. Vorrichtung nach Anspruch 7, **gekennzeichnet** durch in z-Richtung wirkende Druckfedern (93), die sich beidseitig am vorderen Ende des Tragbalkens (23) und an der Oberseite des Fortsatzes (53) abstützen und eine der Begrenzung der Schwenkbewegung dienende Anschlagschraube (88), deren Oberseite am Lagersteg (38) des zweiten Gelenkarmes (36) zur Anlage kommt.

9. Vorrichtung nach Anspruch 7, **gekennzeichnet** durch zwei gegenüberliegend angeordnete und sich zum einen an den Innenseiten der Stege (24) und zum anderen an seitlichen Ausladungen (54) des Fortsatzes (53) jeweils in dortigen Ausnehmungen (110,111) abstützende Druckfedern (94), denen in die Stege (24) eingesetze Schrauben (95) zur Begrenzung der Schwenkbewegung in y-Richtung zugeordnet sind.

10. Vorrichtung nach Anspruch 1, **dadurch gekennzeichnet**, daß in Richtung der herzustellenden Schweißnaht dem Andruckpin (9) eine Schweißdrahtzuführung (98) mit endseitigem Mundstück (99) zugeordnet ist, welche über einen Stützbalken (100) vom vorderen Ende des Tragbalkens (23) gehalten bzw. geführt ist.

11. Vorrichtung nach Anspruch 1, **dadurch gekennzeichnet**, daß in Richtung der herzustellenden Schweißnaht dem Andruckpin (9) eine Sensoreinheit (105) zur Nahterkennung vorgeschaltet und über einen Stützbalken (100) vom vorderen Ende des Tragbalkens (23) gehalten ist.

## Claims

1. Apparatus for producing metal sheet connections by seam welding with a laser beam, wherein contiguous with the immediate weld location a pressure-applying element which operates on one of the metal sheets is associated with the laser beam, **characterised in that** the pressure-applying element is in the form of a pencil-shaped pressure pin (9) which is positioned before or after the laser beam (78) in the direction of the weld seam being produced, and that the pressure pin (9) incorporates a device for feeding protective atmosphere for the welding process to the weld location.

2. Apparatus according to claim 1, **characterised in that** the pressure pin (9) is positioned via fixing means (75) against a lower end of a bracket (8) in the form of an angled bar, which is held by a front end piece (57) of the welding apparatus (1).

3. Apparatus according to claim 1, **characterised in that** the protective atmosphere feed in addition takes place via the bracket (8) for the pressure pin (9).

4. Apparatus according to claim 3, **characterised in that** a hose assembly (64) opens out into a hose connector (65) on an upper end face (66) of the bracket (8) for feeding protective atmosphere which passes to the pressure pin end (10) via bores (68, 69) in the bracket (8) and via a further bore (70) in the pressure pin (9).

5. Apparatus according to claim 1, **characterised in that** the pressure pin (9) and a laser focusing unit (6) which generates the laser beam (78) are rigidly coupled to one another via the welding apparatus (1) and as regards the weld seam profile are resiliently accommodated by the welding apparatus (1) in the Y and Z directions.

6. Apparatus according to claim 5, **characterised in that** between a bracket element (5) accommodating the welding apparatus (1), and the positions at which the laser focusing unit (6) and the pressure pin bracket (8) are connected, the welding apparatus (1) features two bearing locations (33, 46) which are situated at right angles to one another and permit a swivelling motion of the respective unit connected at the outlet side.

7. Apparatus according to claim 6, **characterised in that** it is constructed essentially as follows:
• an elongate girder (23) which is set against an upper baseplate (18) and the frontal region of which broadens out in the shape of a V and is stabilised by means of a stiffening rib (20), and which in the V-shaped region has fixed links (24) which project away downwards,
• bearing links (25, 26) set against a lower baseplate (19) for receiving the bed bolt (33) which is connected to an articulation arm (34) contiguous therewith, in a manner locked against rotation but entraining said arm (34),
• a second articulation arm (36) connected to the articulation arm (34) by means of bearing links (38, 39), forwardly in the direction of the laser focusing unit (6) and via the second bed bolt (46),
• an extension piece (53) contiguous with the second articulation arm (36) and joined thereto, there being formed at the connection point a bush for mounting the laser focusing unit (6),
• an end piece (57) contiguous with the extension piece (53) and joined thereto, said end piece featuring a further bush (59) for receiving and mounting the bracket (8) for the pressure pin (9).

8. Apparatus according to claim 7, **characterised by** compression springs (93) which act in the Z direction and which rest with both ends against the front end of the girder (23) and against the upper face of the extension piece (53), and an adjusting screw (88) which is used to delimit the swivelling motion and the upper face of which makes contact with the bearing link (38) for the second articulation arm (36).

9. Apparatus according to claim 7, **characterised by** two opposed compression springs (94) which rest on the one hand against the inner faces of the links (24) and on the other hand against lateral overhangs (54) of the extension piece (53), in each case in recesses (110, 111) therein, with screws (95) inserted into the links (24) to delimit the swivelling motion in the Y direction being associated with said compression springs (94).

10. Apparatus according to claim 1, characterised in that associated with the pressure pin (9), in the direction of the weld seam being produced, is a welding wire feeder (98) with a mouthpiece (99) on the end thereof, said feeder (98) being retained and guided by the front end of the girder (23) via a supporting beam (100).

11. Apparatus according to claim 1, **characterised in that** in the direction of the weld seam being produced, a sensor unit (105) for seam recognition is connected on the inlet side of the pressure pin (9) and is retained by the front end of the girder (23) via a supporting beam (100).

## Revendications

1. Dispositif pour réaliser des liaisons de tôles par cordon de soudure au moyen d'un rayon laser, où de façon limitrophe au point de soudure direct, un élément de pressage agissant sur l'une des tôles est associé au rayon laser, caractérisé en ce que l'élément de pressage est réalisé sous la forme d'une tige de pressage (9) en forme de barre, placée à l'avant ou à l'arrière du rayon laser (78) dans la direction du cordon de soudure à réaliser et en ce que la tige de pressage (9) présente un dispositif pour l'amenée, à l'emplacement du soudage, de gaz protecteur destiné au processus de soudage.

2. Dispositif selon la revendication 1, caractérisé en ce que la tige de pressage (9) est appliquée par l'intermédiaire de moyens de fixation (75) sur une extrémité inférieure d'un support (8) réalisé sous la forme d'une barre coudée, qui est maintenu par une pièce d'extrémité avant (57) du dispositif de soudage (1).

3. Dispositif selon la revendication 1, caractérisé en ce que l'alimentation en gaz protecteur s'effectue en outre par l'intermédiaire du support (8) de la tige de pressage (9).

4. Dispositif selon la revendication 3, caractérisé en ce qu'une conduite en tuyau (64) débouche dans un raccordement de tuyau (65) sur une face frontale supérieure (66) du support (8), qui passe, par des perçages (68, 69), dans le support (8) et par, un autre perçage (70), dans la tige de pressage (9), sur l'extrémité (10) de la tige de perçage.

5. Dispositif selon la revendication 1, caractérisé en ce que la tige de pressage (9) et une unité de focalisation laser (6) générant le rayon laser (78) sont couplées ensemble rigidement par l'intermédiaire du dispositif de soudage (1) et sont supportées avec un montage élastique par rapport au dispositif de soudage (1) dans la direction y et la direction z par rapport à l'allure du cordon de soudure.

6. Dispositif selon la revendication 5, caractérisé en ce que le dispositif de soudage (1) présente, entre un élément support (5) le supportant et les points de raccordement de l'unité de focalisation laser (6) et du support de tige de pressage (8), deux points de palier (33, 46) placés à angle droit l'un par rapport à l'autre, permettant un mouvement de pivotement de chaqu'unité placée en aval.

7. Dispositif selon la revendication 6, caractérisé en ce qu'il est constitué essentiellement comme suit :
• une poutre support (23) placée sur une plaque de base supérieure (18), allongée et allant en s'élargissant en forme de V dans la zone avant et stabilisée au moyen d'une nervure de rigidification (20), avec des nervures (24) s'écartant vers le bas dans la zone en forme de V,
• des nervures de palier (25, 26) placées sur une plaque de base inférieure (19) pour supporter le boulon de palier (33) qui est relié en entraînement avec assujettissement en rotation à un bras articulé (34) s'y raccordant,
• un deuxième bras articulé (36) raccordé vers l'avant en direction de l'unité de focalisation laser (6) au bras articulé (34) par l'intermédiaire du deuxième boulon de palier (46), au moyen des nervures de palier (38,39),
• un prolongement (53) se raccordant au deuxième bras articulé (36) et relié à celui-ci, une coquille de palier, destinée à la fixation de l'unité de focalisation laser (6), étant constituée au point de liaison,
• une pièce d'extrémité (57), se raccordant au prolongement (53) et reliée à celui-ci, qui présente une autre coquille de palier (59) pour supporter et fixer le support (8) de la tige de pressage (9).

8. Dispositif selon la revendication 7, caractérisé par des ressorts de compression (93) agissant dans la direction z, qui prennent appui des deux côtés sur l'extrémité avant de la poutre support (23) et sur la face supérieure du prolongement (53) et une vis de butée (88) servant à limiter le mouvement de pivotement, dont la face supérieure vient en appui sur la nervure de palier (38) du deuxième bras articulé (36).

9. Dispositif selon la revendication 7, caractérisé par deux ressorts de compression (94) disposés à l'opposé et prenant appui, d'une part, sur les faces intérieures des nervures (24) et, d'autre part, sur des saillies latérales (54) du prolongement (53) chaque fois dans des évidements (110, 111) réalisés à cet endroit, ressorts auxquels des vis (95) insérées dans les nervures (24) sont associées pour limiter le mouvement de pivotement dans la direction y.

10. Dispositif selon la revendication 1, caractérisé en ce que, dans la direction du cordon de soudure à réaliser, à la tige de pressage (9) est associée une alimentation en fil de soudage (98) avec une pièce d'embouchure (99) située côté extrémité qui est maintenue ou guidée par une poutre de soutien (100) depuis l'extrémité avant de la poutre support (23).

11. Dispositif selon la revendication 1, caractérisé en ce que, dans la direction du cordon de soudure à réaliser, à la tige de pressage (9), une unité à capteur (105) destinée à l'identification du cordon est montée à l'avant et est maintenue, par l'intermédiaire d'une poutre d'appui (100), par l'extrémité avant de la poutre support (23).
